# EUROPÄISCHE PATENTSCHRIFT

(11) **EP 1 238 860 B1**
(45) Veröffentlichungstag und Bekanntmachung des Hinweises auf die Patenterteilung: **19.11.2003**
(21) Anmeldenummer: 02001630.9
(22) Anmeldetag: 24.01.2002
(51) Int. Cl.: B60R 13/02

(54) **Lösbare Befestigung einer Innenverkleidung, insbesondere einer Dachverkleidung, an einem Aufnahmeteil eines Kraftfahrzeuges**
Releasable fastening of an inner liner panel, especially of a roof panel, to a receiving part of a vehicle
Fixation démontable d'un habillage intérieur, notamment d'un habillage de plafond, à une pièce de support d'un véhicule automobile

(30) Priorität: 09.03.2001 DE 10111526
(43) Veröffentlichungstag der Anmeldung: 11.09.2002
(73) Patentinhaber: Dr.Ing. h.c.F. Porsche Aktiengesellschaft, 70435 Stuttgart (DE)
(72) Erfinder: Luik, Klaus, 75417 Mühlacker (DE); Benkler, Olaf, 75242 Neuhausen/Hamberg (DE)

(56) Entgegenhaltungen:
- EP-A- 0 090 947
- EP-A- 0 967 136
- DE-A- 2 213 820
- FR-A- 2 698 058
- US-A- 3 195 948
- PATENT ABSTRACTS OF JAPAN vol. 010, no. 002 (M-444), 8. Januar 1986 (1986-01-08) -& JP 60 166544 A (TOYOTA SHIYATAI KK), 29. August 1985 (1985-08-29)
- PATENT ABSTRACTS OF JAPAN vol. 011, no. 289 (M-625), 18. September 1987 (1987-09-18) -& JP 62 083233 A (MASAO MIKAMI), 16. April 1987 (1987-04-16)

## Beschreibung

Die Erfindung bezieht sich auf eine lösbare Befestigung einer Innenverkleidung, insbesondere einem Aufnahmeteil eines Kraftfahrzeuges nach dem Oberbegriff des Patentanspruchs 1.

Bei einer derartigen, aus der DE 44 14 905 C2 bekannten Innenverkleidung sind an der Rückseite aufgespreizte Rasthaken ausgebildet, die bei der Montage in Ausklinkungen, Verprägungen des karosserieseitigen Aufnahmeteils des Kraftfahrzeugs eingeführt werden. Anschließend wird auf einen abgestellten Flansch des Aufnahmeteils ein Kantenschutzprofil montiert, wobei eine langgestreckte Lippe des Kantenschutzprofils einen Randbereich der Innenverkleidung überlappt und an diesem anliegt. Dieser Anordnung haftet der Nachteil an, daß die Ausbildung der karosserieseitigen Ausklinkungen am Aufnahmeteil einen erheblichen Aufwand darstellen und daß durch die Ausklinkungen zudem die Stabilität des Aufnahmeteils verringert wird. Zur Demontage der Innenverkleidung muß ferner das Kantenschutzprofil abgenommen werden.

Auch weist das montierte Kantenschutzprofil im Fahrgastraum aufgrund der langen abgestellten Lippe für den Randbereich der Innenverkleidung eine relativ große Breite auf, was aus stylistischen Gründen oftmals als störend empfunden wird.

Aufgabe der Erfindung ist es, eine Befestigung für eine gattungsgemäße Innenverkleidung so weiterzubilden, das einerseits der Herstellungsaufwand verringert und andererseits die Optik verbessert wird.

Diese Aufgabe wird erfindungsgemäß durch die Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Befestigung der Innenverkleidung am Kantenschutzprofil auf aufwendige, aufbauseitige Maßnahmen verzichtet werden kann und daß durch das Einstecken des Randbereichs der Innenverkleidung in eine Aufnahmenut des Kantenschutzprofils keine langgestreckte Lippe am Kantenschutzprofil benötigt wird, was das optische Aussehen verbessert.

Die Rasthaken sind an separaten Kunststoffteilen ausgebildet, die örtlich an der Rückseite der Innenverkleidung befestigt sind. Dies kann durch Kleben oder dgl. erfolgen. Die Rasthaken wirken hintergreifend mit dem freien Ende eines Schenkels eines Aufsteckabschnitts des Kantenschutzprofils zusammen. Vorzugsweise sind im Bereich der Rasthaken örtliche Stützrippen angeformt, die die Rasthaken stabilisieren.

Ein Ausführungsbeispiel der Erfindung ist in den Zeichnungen dargestellt und wird im folgenden näher beschrieben:

Es zeigen
- Fig. 1: eine perspektivische Draufsicht auf eine Innenverkleidung eines Kraftfahrzeugs,
- Fig. 2: eine Einzeleinheit X der Fig. 1 in größerem Maßstab und
- Fig. 3: einen Schnitt nach der Linie III-III der Fig. 2.

Die als Ausführungsbeispiel in den Figuren dargestellte Innenverkleidung 1 für ein Kraftfahrzeug wird durch eine Dachverkleidung gebildet und zwar durch einen vorgefertigten, selbsttragenden Fertighimmel 2. Die Innenverkleidung 1 umfaßt zumindest ein plattenförmiges Trägerteil 3, das auf der einem Fahrgastraum 4 zugewandten Seite mit einem dekorativen Bezug 5 kaschiert ist.

Die großflächige Innenverkleidung 1 ist an beiden Längsseiten 6 an angrenzenden karosserieseitigen Aufnahmeteilen 7 befestigt, wobei die Aufnahmeteile 7 durch seitliche Dachrahmen 8 des Kraftfahrzeuges gebildet werden.

Zur lösbaren Befestigung der Innenverkleidung 1 ist auf einen abgestellten Flansch 9 des Aufnahmeteiles 7 ein Kantenschutzprofil 10 aufgesteckt, das sich aus einem etwa U-förmig profilierten Aufsteckabschnitt 11 und einem seitlich davon angeordneten Schlauchprofil 12 zusammensetzt.

Erfindungsgemäß ist ein nach oben hin abgestellter Randbereich 13 der Innenverkleidung 1 in eine Aufnahmenut 14 des Kantenschutzprofils 10 eingeführt, wobei die zum Fahrgastraum 4 hin offene Aufnahmenut 14 im Übergangsbereich zwischen den Aufsteckabschnitt 11 und dem Schlauchprofil 12 vorgesehen ist.

Ferner sind zur Befestigung der Innenverkleidung 1 an dieser und zwar auf der dem Fahrgastraum 4 abgekehrten Seite örtlich Resthaken 15 vorgesehen, die mit dem Kantenschutzprofil 10 hintergreifend zusammenwirken.

Die Resthaken 15 sind im Ausführungsbeispiel an langgestreckten Kunststoffteilen 16, 17 ausgebildet, die mit der Rückseite der Innenverkleidung 1 durch Kleben oder dgl. fest verbunden sind.

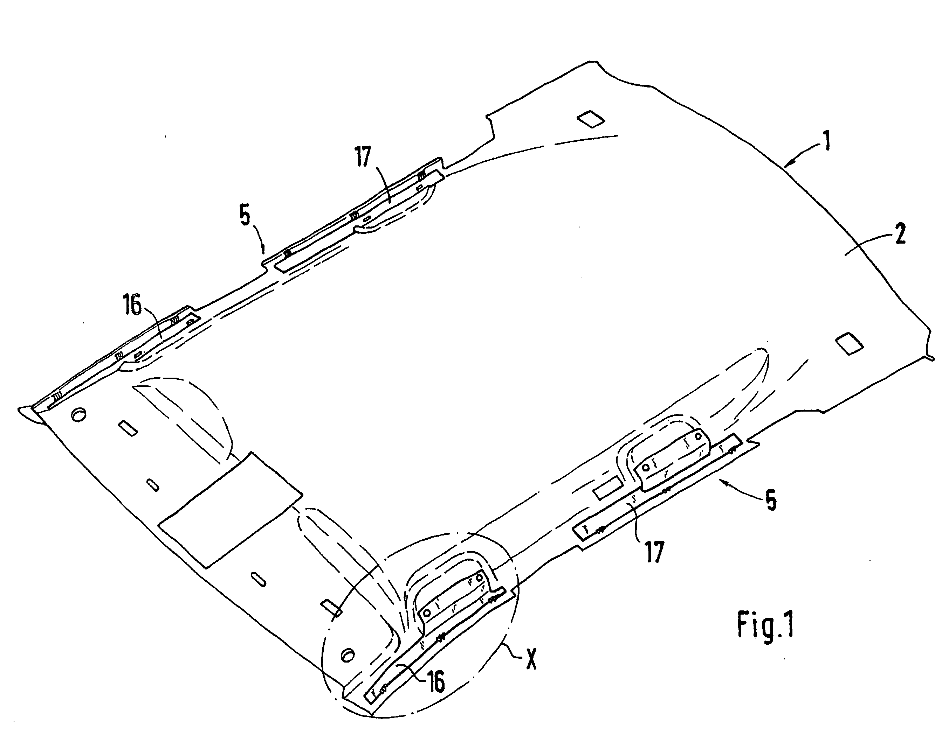

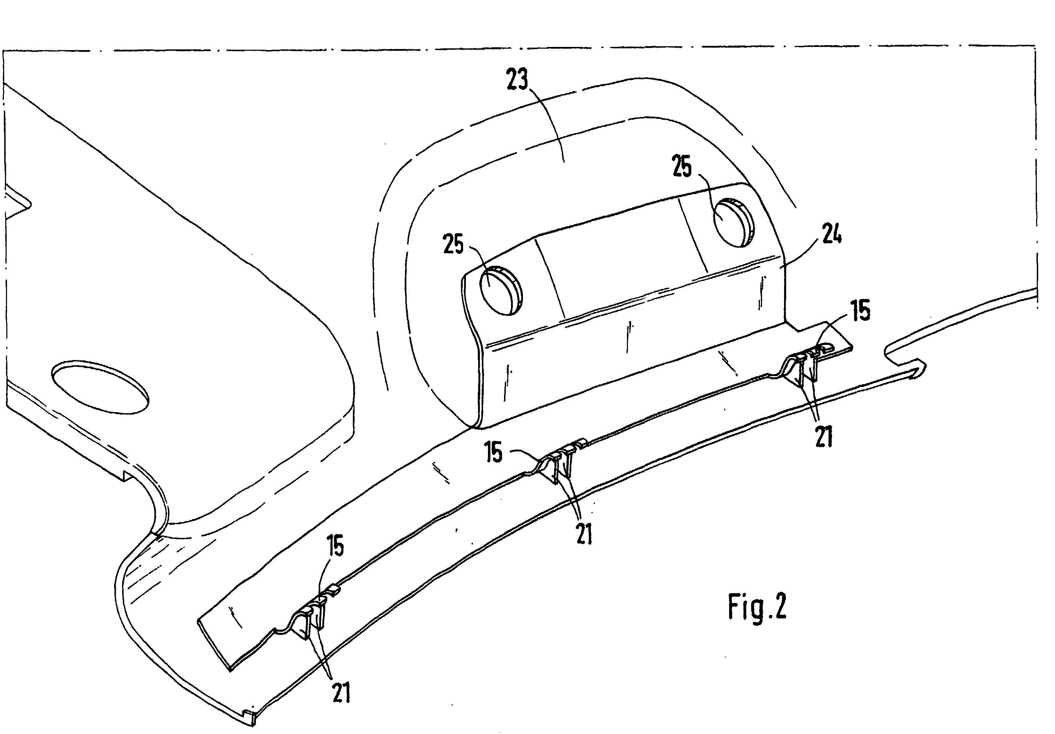

Gemäß Fig. 1 sind an beiden Längsseiten 6 der Innenverkleidung 1 jeweils zwei beabstandet angeordnete, langgestreckte Kunststoffteile 16, 17 angeordnet. Entsprechend Fig. 2 sind an den Kunststoffteilen 16, 17 örtlich die nach oben hin ragenden Rasthaken 15 angeformt. Die Rasthaken 15 verlaufen mit Abstand zum äußeren Randbereich 13 der Innenverkleidung 1 und können entlang ihrer Längserstreckung örtlich geschützt sein.

Ein endseitiger gebogener Hakenabschnitt 18 jedes Rasthakens 15 hintergreift bei montierter Innenverkleidung ein freies Ende 19 eines innenliegenden Schenkels 20 des Aufsteckabschnitts 11 des Kantenschutzprofiles 10.

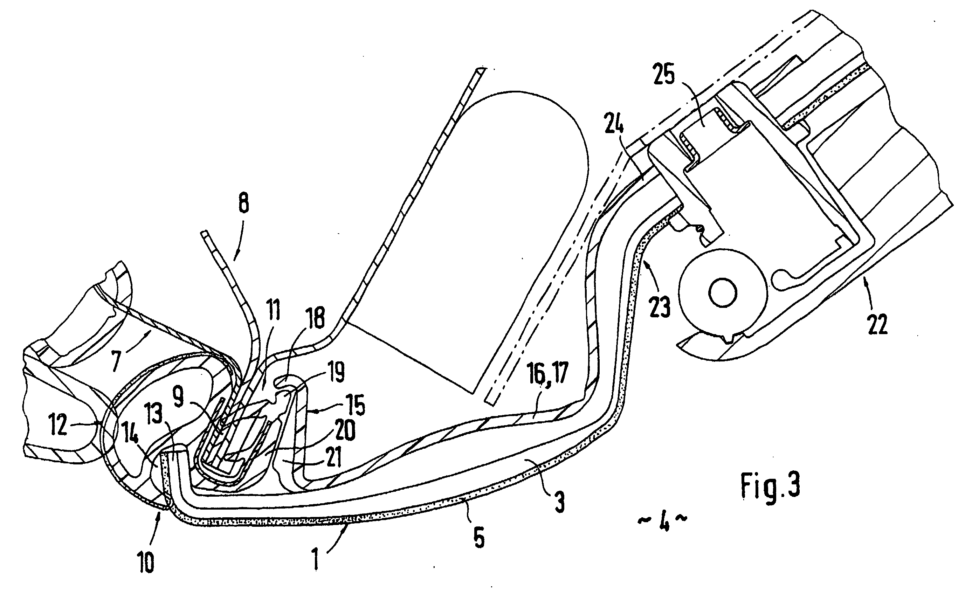

An den Rasthaken 15 sind örtlich Stützrippen 21 ausgebildet, die an der Außenseite des Schenkels 20 des Aufsteckabschnitts 11 anliegen (Fig. 3). Bei der Montage der Innenverkleidung wird diese nach oben gefahren und der Randbereich 13 in die Aufnahmenut 14 des bereits aufgesteckten Kantenschutzprofils 10 eingeführt. Die Rasthaken 15 verrasten beim Hochdrücken der Innenverkleidung 1 mit dem Kantenschutzprofil 10, wodurch die Innenverkleidung 1 befestigt ist. Zusätzlich kann über die Haltegriffe 22 eine weitere Befestigung der Innenverkleidung 1 erfolgen. Im Bereich der Haltegriffe 22 ist die Innenverkleidung mit einer Einprägung 23 versehen und jedes Kunststoffteil 16, 17 weist örtlich eine rechteckförmige Anformung 24 mit Öffnungen 25 zum Hindurchführen von Befestigungsschrauben für den Haltegriff 22 auf.

Die angrenzend an das Schlauchprofil 12 und den Aufsteckabschnitt 11 angeordnete Aufnahmenut 14 ergibt ein sehr schmales Kantenschutzprofil 10 mit einem kederlosen Design (ohne Dichtlippe), was aus optischen Gründen als vorteilhaft anzusehen ist.

## Patentansprüche

1. Lösbare Befestigung einer Innenverkleidung (1), insbesondere einer Dachverkleidung, an einem Aufnahmeteil (7) eines Kraftfahrzeuges, wobei auf einen Flansch (9) des Aufnahmeteiles (7) ein mit einem abgestellten Randbereich (13) der Innenverkleidung (1) zusammenwirkendes Kantenschutzprofil (10) aufgesteckt ist und an der Innenverkleidung (1) örtlich Rasthaken (15) zur Befestigung vorgesehen sind, **dadurch gekennzeichnet, daß** der abgestellte Randbereich der Innenverkleidung (1) in eine Aufnahmenut (14) des Kantenschutzprofils (10) eingesteckt ist und daß die Rasthaken (15) der Innenverkleidung (1) mit dem Kantenschutzprofil (10) hintergreifend zusammenwirken.

2. Lösbare Befestigung einer Innenverkleidung (1) nach Anspruch 1, **dadurch gekennzeichnet, daß** die Rasthaken (15) an örtlich auf der Rückseite der Innenverkleidung (1) angebrachten Kunststoffteilen (16, 17) vorgesehen sind.

3. Lösbare Befestigung einer Innenverkleidung (1) nach den Ansprüchen 1 und 2, **dadurch gekennzeichnet, daß** die Kunststoffteile (16, 17) mit der Innenverkleidung (1) verklebt sind.

4. Lösbare Befestigung einer Innenverkleidung (1) nach Anspruch 1, **dadurch gekennzeichnet, daß** die Rasthaken (15) mit dem freien Ende eines Schenkels (20) eines Ausfsteckabschnitts (11) des Kantenschutzprofils (10) hintergreifend zusammenwirken.

5. Lösbare Befestigung einer Innenverkleidung (1) nach den Ansprüchen 1 bis 4, **dadurch gekennzeichnet, daß** an den Rasthaken (15) örtlich Stützrippen (21) angeformt sind, die an der Außenseite des Schenkels (20) des Aufsteckabschnitts (11) des Kantenschutzprofils (10) anliegen.

6. Lösbare Befestigung einer Innenverkleidung (1) nach den Ansprüchen 1 bis 5, **dadurch gekennzeichnet, daß** die Innenverkleidung (1) im Bereich der Kunststoffteile (16, 17) zusätzlich über Haltegriffe (22) am karosserieseitigen Aufnahmeteil (7) in Lage gehalten ist.

## Claims

1. A releasable fastening of an interior lining panel (1), in particular a roof lining panel, on a receiving part (7) of a motor vehicle, wherein an edge-protection section (10) cooperating with a projecting edge region (13) of the interior lining panel (1) is mounted on a flange (9) of the receiving part (7) and catch hooks (15) for fastening purposes are provided locally on the interior lining panel (1), **characterized in that** the projecting edge region (13) of the interior lining panel (1) is inserted into a receiving groove (14) in the edge-protection section (10), and the catch hooks (15) of the interior lining panel (1) co-operate with the edge-protection section (10) while engaging behind it.

2. A releasable fastening of an interior lining panel (1) according to Claim 1, **characterized in that** the catch hooks (15) are provided on parts (16, 17) of plastics material attached locally on the rear side of the interior lining panel (1).

3. A releasable fastening of an interior lining panel (1) according to Claims 1 and 2, **characterized in that** the parts (16, 17) of plastics material are secured by adhesion to the interior lining panel (1).

4. A releasable fastening of an interior lining panel (1) according to Claim 1, **characterized in that** the catch hooks (15) co-operate with the free end of an arm (20) of a push-on portion (11) of the edge-protection section (10) while engaging behind it.

5. A releasable fastening of an interior lining panel (1) according to Claims 1 to 4, **characterized in that** support ribs (21), which rest against the outside of the arm (20) of the push-on portion (11) of the edge-protection section (10), are formed locally on the catch hooks (15) in an integral manner.

6. A releasable fastening of an interior lining panel (1) according to Claims 1 to 5, **characterized in that** the interior lining panel (1) in the region of the parts (16, 17) of plastics material is additionally held in position on the receiving part (7) on the bodywork by way of holding grips (22).

## Revendications

1. Fixation amovible d'un habillage intérieur (1), en particulier d'un habillage de toit, sur un élément récepteur (7) d'un véhicule automobile, un profilé de protection de chant (10), coopérant avec une zone de bordure (13) décalée de l'habillage intérieur (1), étant emboîté sur une bride (9) de l'élément récepteur (7) et sur l'habillage intérieur (1) étant prévus des crochets d'encliquetage (15) locaux pour la fixation, **caractérisée en ce que** la zone de bordure décalée de l'habillage intérieur (1) est enfichée dans une rainure de réception (14) du profilé de protection de chant (10) et **en ce que** les crochets d'encliquetage (15) de l'habillage intérieur (1) coopèrent avec le profilé de protection de chant (10) en passant derrière celui-ci.

2. Fixation amovible d'un habillage intérieur (1) selon la revendication 1, **caractérisée en ce que** les crochets d'encliquetage (15) sont prévus sur des pièces en matière plastique (16, 17) placées localement sur la face arrière de l'habillage intérieur (1).

3. Fixation amovible d'un habillage intérieur (1) selon les revendications 1 et 2, **caractérisée en ce que** les pièces en matière plastique (16, 17) sont collées avec l'habillage intérieur (1).

4. Fixation amovible d'un habillage intérieur (1) selon la revendication 1, **caractérisée en ce que** les crochets d'encliquetage (15) coopèrent avec l'extrémité libre d'une branche (20) d'une portion d'emboîtement (11) du profilé de protection de chant (10) en passant derrière celle-ci.

5. Fixation amovible d'un habillage intérieur (1) selon les revendications 1 à 4, **caractérisé en ce que** sur les crochets d'encliquetage (15) sont formées localement des nervures d'appui (21) qui s'appliquent contre le côté extérieur de la branche (20) de la portion d'emboîtement (11) du profilé de protection de chant (10).

6. Fixation amovible d'un habillage intérieur (1) selon les revendications 1 à 5, **caractérisée en ce que** l'habillage intérieur (1) est immobilisé en outre dans la zone des pièces en matière plastique (16, 17) par des poignées de maintien (22) sur l'élément récepteur (7) côté carrosserie.
